# EUROPEAN PATENT APPLICATION

(11) **EP 3 923 070 A1**
(43) Date of publication of application: **15.12.2021**
(21) Application number: 20184657.3
(22) Date of filing: 08.07.2020
(51) Int. Cl.: G03B 21/585

(54) **INFLATABLE PROJECTION DISPLAY SYSTEM WITH DUAL SCREENS**

(30) Priority: 09.06.2020 US 202016946182
(71) Applicant: Deutsch Inc. dba DTA Global - Outdoor Movies, Rockville MD 20850 (US)
(72) Inventor: DEUTSCH, Robert, Rockville, MD Maryland 20850 (US); KREMER, Christian, Rockville, MD Maryland 20850 (US)
(74) Representative: Schiffer, Axel Martin

(57) **Abstract**

An inflatable display system (100) with a projection screen (116, 120) on two opposing sides (102A-102B) is provided that allows a single inflatable display support (104, 108, 112) to allow viewers to watch the screens on both sides, thereby doubling the number of viewers per inflatable display support without increasing the size of the display support. An opaque material (132) is placed between the projection screens or integrated into the back of the screens to avoid interference from light from images projected from the opposite side.

## Description

### Field of the invention

The present invention generally relates to large, inflatable display systems. In particular, the present invention is directed to an inflatable projection display system with dual screens.

### Background

Large display systems with projection screens for use in outdoor environments are known. Some of these displays are air inflatable such that they may be portable and used temporarily or seasonally. These larger displays are expensive, and the larger the size, the more expensive they are. Additionally, more time, labor and effort is involved with set up, take down, transport, and storage. There is a need for outdoor projection screens that can be viewed by more people and are more cost effective in relation to the number of viewers that can be accommodated economically.

### Summary of the DISCLOSURE

A device for projection images includes an air supported frame with a first viewing side and a second viewing side opposite and parallel to the first viewing side, and including a top portion, a base, and side support sections, wherein the air supported frame includes at least one opening for inflating and deflating the frame. A first projection screen is attached to the first viewing side, a second projection screen attached to the second viewing side, wherein the first projection screen and the second projection screen are similarly sized. Opaque material is either integrated into the projection surfaces or positioned within the air supported frame between the first projection screen and the second projection screen such that light from projected images onto the first projection screen does not interfere with projections on the second projection screen, and light from projected images onto the second projection screen does not interfere with projections on the first projection screen.

### Brief description of the drawings

For the purpose of illustrating the invention, the drawings show aspects of one or more embodiments of the invention. However, it should be understood that the present invention is not limited to the precise arrangements and instrumentalities shown in the drawings, wherein:
- FIG. 1: is a front perspective view of an inflatable projection display system with duel screens in accordance with an embodiment of the present invention;
- FIG. 2: is a front view of the display system of FIG. 1;
- FIG. 3: is a back view of the display system of FIG. 1;
- FIG. 4: is a top view of the display system of FIG. 1;
- FIG. 5: is a side view of the display system of FIG. 1;
- FIG. 6: is a section view through the side view of FIG. 5; and
- FIG. 7: is a perspective view of an inflatable projection display system with duel screens and stabilizing lines in accordance with another embodiment of the present invention.

### Description of the disclosure

An inflatable display system with a projection screen on two opposing sides is provided that allows a single inflatable display support frame to allow viewers to watch the screens on both sides, thereby doubling the number of viewers per inflatable display support without increasing the size of the inflatable display support. Opaque material may be placed between the projection screens or integrated into the projection screens to avoid interference from light from projections from the opposite side. In this way, a screen operator or user can accommodate viewers on both sides of the display system, essentially doubling viewer capacity without having to set up two inflatable supports or increase the size of the screen/support system (which tends to significantly increase costs and the time required to set up, take down, and transport the display support system).

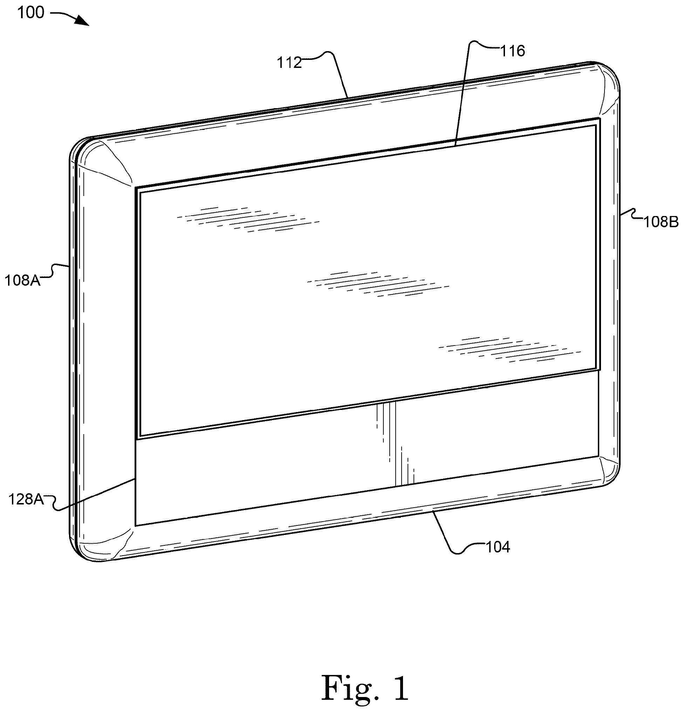

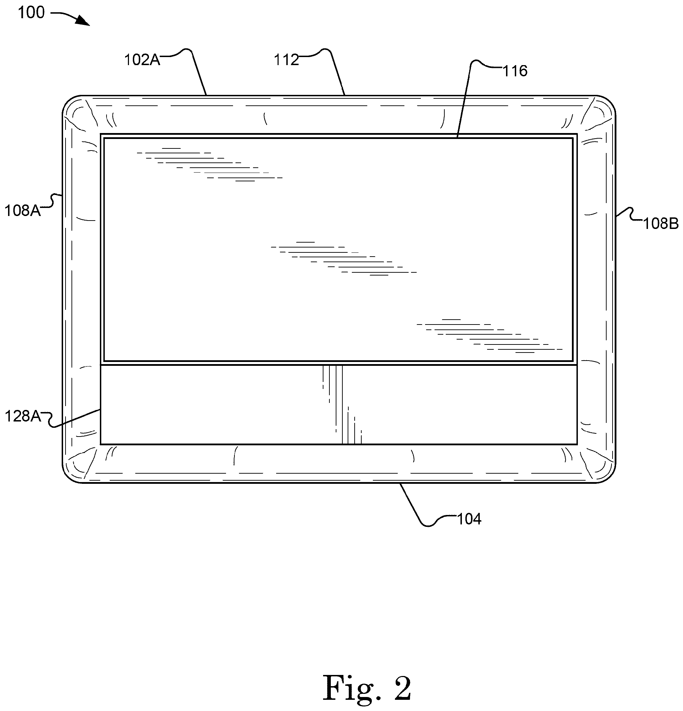

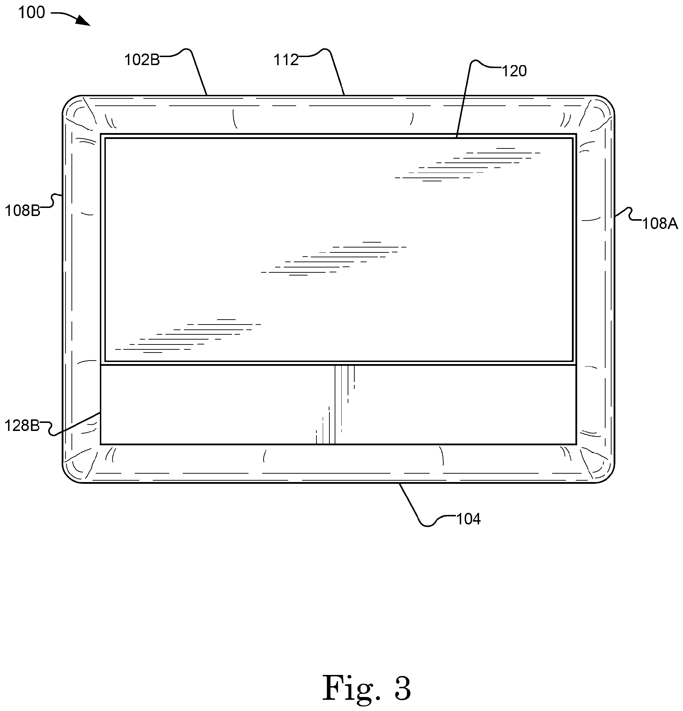

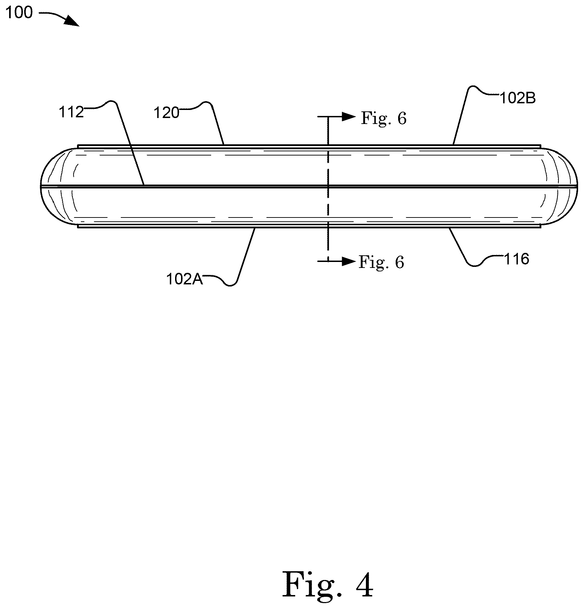

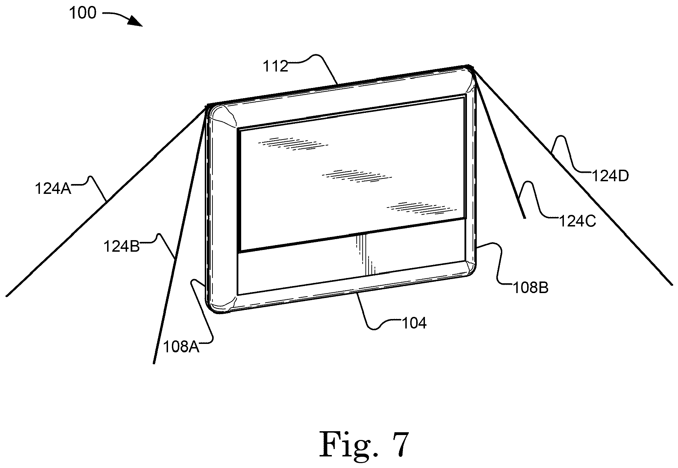

Turning to the figures, and in particular FIGS. 1-6, an exemplary inflatable display support system 100 is shown that has a first viewing side 102A and a second viewing side 102B (opposite first viewing side 102A) and includes a base 104, side supports 108 (e.g., 108A, 108B), a top support 112, a first projection screen 116 (which can be seen in FIGS. 1-2) on first viewing side 102A, and a second projection screen 120 (which can be seen in FIG. 3) on an opposite side and in parallel with first projection screen 116 such that the screens are generally facing in opposite directions. Inflatable display support system 100 can be erected on a temporary or seasonal basis, including in outdoor environments. A blower (not shown) or other suitable mechanism is used to inflate inflatable display support system 100 and maintain sufficient pressure within during use. Stabilizing guy tethers or lines 124 (e.g., 124A-124D, shown in FIG. 7) can be attached or integrated with the inflatable display support system 100, such as to top support 112, side supports 108, and/or base 104 in order to assist in holding inflatable display support system 100 in place and maintaining the stability in an outdoor environment.

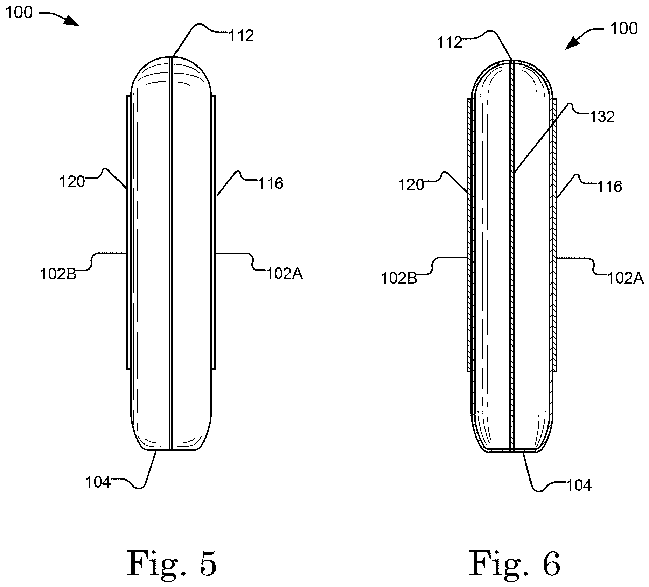

Projection screens 116, 120 may be attached to inflatable display support system 100 by any suitable means such as a hook and eye mechanism, snaps, zippers, or any combination thereof. Projection screens 116, 120 are preferably of a similar size, i.e., both designed to be viewed by about the same number of people. For example, projection screens may vary from being about 10 feet in diagonal to being over 150 feet diagonal, and in this context similarly sized projections screens would be within 10% of each other in the diagonal dimension. In a preferred embodiment, a lower panel skirt 128 (e.g., 128A, 128B) is affixed by any suitable method, such as by a hook and eye mechanism, snaps, zippers, or any combination thereof, to inflatable display support system 100 partially over and above base 104 on both first viewing side 102A and second viewing side 102B. In addition, in a preferred embodiment an opaque surface 132 (which can be seen in FIG. 6) is positioned between first projection screen 116 and second projection screen 120 in order to prevent or reduce stray light from first viewing side 102A from interfering with images shown on second projection screen 120 and vice versa. Opaque surface 132 can be any suitable material including a dark flexible sheet-like plastic material and can be located anywhere in between first projection screen 116 and second projection screen 120. In the alternative, opaque material is integrated with the projection screen such that the projection screen has a white viewing surface and a black backing.

Exemplary embodiments have been disclosed above and illustrated in the accompanying drawings. It will be understood by those skilled in the art that various changes, omissions and additions may be made to that which is specifically disclosed herein without departing from the spirit and scope of the present invention.

## Claims

1. A device for projection images comprising:
an air supported frame with a first viewing side and a second viewing side opposite the first viewing side, and including a top portion, a base, and a pair of side support sections, wherein the air supported frame includes at least one opening for inflating and deflating the frame;
a first projection screen attached to the first viewing side;
a second projection screen attached to the second viewing side, wherein the first projection screen and the second projection screen are parallel to each other and similarly sized;
and
an opaque material positioned such that light from images projected onto the first projection screen does not interfere with projections on the second projection screen and light from images projected onto the second projection screen does not interfere with projections on the first projection screen.

2. The device according to claim 1, wherein the opaque material is a sheet positioned between the first projection screen and the second projection screen.

3. The device according to claim 1 or claim 2, wherein a first portion of the opaque material is integrated with the first projection screen such that the first projection screen has a white viewing surface and a black backing and wherein a second portion of the opaque material is integrated with the second projection screen such that the second projection screen has a white viewing surface and a black backing.

4. The device according to one of the claims 1 to 3, further including a first lower panel skirt attached to the first viewing side beneath the first projection screen and a second lower panel skirt attached to the second viewing side beneath the second projection screen.

5. A device for projection images comprising:
an air supported frame with a first viewing side and a second viewing side opposite the first viewing side, and including a top portion, a base, and a pair of side support sections, wherein the air supported frame includes at least one opening for inflating and deflating the frame;
a first projection screen attached to the first viewing side;
a second projection screen attached to the second viewing side, wherein the first projection screen and the second projection screen are parallel to each other and similarly sized;
a first lower panel skirt attached to the first viewing side beneath the first projection screen;
a second lower panel skirt attached to the second viewing side beneath the second projection screen; and
an opaque material positioned between the first projection screen and the second projection screen such that light from images projected onto the first projection screen does not interfere with projections on the second projection screen and light from images projected onto the second projection screen does not interfere with projections on the first projection screen.

6. The device of claim 5, further including a plurality of tether lines attached to the top portion on one end and to the ground on another end such that none of the plurality of tether lines crosses in front of the first projection screen on the first viewing side or the second projection screen on the second viewing side.

7. The device of claim 5 or claim 6, wherein the first projection screen is rectangular with a diagonal dimension between 10 feet and 150 feet, wherein the second projection screen is rectangular with a second screen diagonal dimension between 10 feet and 150 feet, and wherein the diagonal dimension and the second screen diagonal dimension are similar.

8. A device for projection images comprising:
an air supported frame with a first viewing side and a second viewing side opposite the first viewing side, and including a top portion, a base, and side support sections, wherein the air supported frame includes at least one opening for inflating and deflating the frame, wherein the first view side and the second viewing side are parallel to each other;
a first projection screen attached to the first viewing side;
a second projection screen attached to the second viewing side, wherein the first projection screen and the second projection screen are similarly sized;
a first lower panel skirt attached to the first viewing side beneath the first projection screen;
a second lower panel skirt attached to the second viewing side beneath the second projection screen; and
an opaque material positioned within the air supported frame between the first projection screen and the second projection screen such that light from images projected onto the first projection screen does not interfere with projections on the second projection screen and light from images projected onto the second projection screen does not interfere with projections on the first projection screen.
